# EUROPEAN PATENT APPLICATION

(11) **EP 4 596 660 A1**
(43) Date of publication of application: **06.08.2025**
(21) Application number: 25154405.2
(22) Date of filing: 28.01.2025
(51) Int. Cl.: C10M 101/02, C10M 129/16, C08F 2/08, C08F 120/06

(54) **LUBRICANT COMPOSITION FOR PREPARING ETHYLENE-BASED POLYMER AND METHOD OF PREPARING ETHYLENE-BASED POLYMER USING THE SAME**

(30) Priority: 31.01.2024 KR 20240014532
(71) Applicant: SK innovation Co., Ltd., Seoul 03188 (KR); SK Geo Centric Co., Ltd., Seoul 03188 (KR)
(72) Inventor: LEE, Ho Seong, 34124 Daejeon (KR); KIM, Won Bin, 34124 Daejeon (KR); PARK, Ji Hye, 34124 Daejeon (KR)
(74) Representative: Thoma, Michael

(57) **Abstract**

A lubricant composition for preparing an ethylene copolymer according to embodiments of the present disclosure includes a base oil including a white mineral oil, and an oxidation stabilizer represented by Formula 1. The oxidation stabilizer may have a solubility of 0.1 g/100 g or more in the white mineral oil at 25°C.

## Description

### [BACKGROUND OF THE INVENTION]

### 1. Field of the Invention

The present disclosure relates to a lubricant composition for preparing an ethylene-based polymer and a method of preparing an ethylene-based polymer using the same.

### 2. Description of the Related Art

An ethylene-based polymer is utilized for various applications such as a sealing material, an adhesive, a packing material, an optical film and the like. For example, the ethylene-based polymer may include an ethylene-carboxylic acid copolymer, an ethylene-(alkyl)acrylate copolymer, polyethylene and the like.

The ethylene-based polymer may be prepared by polymerizing ethylene and/or a comonomer (e.g., carboxylic acid, acrylate, etc.) through high pressure equipment such as a compressor (compression device). However, ethylene or comonomer may be self-polymerized when exposed to high temperature and pressure environments in a process of supplying it to a reactor through the compressor and the like.

When the above-described monomer is self-polymerized, equipment defects such as clogging, plugging, and flow path blocking of the above-described monomer introduction equipment may occur. Accordingly, a production yield of the copolymer may be decreased, and it may be difficult to uniformly repeat the process.

Methods of using an oxidation stabilizer such as butylated hydroxytoluene (BHT) together to inhibit internal plugging, etc. are being studied. However, in order to effectively prevent the above-described equipment defects, a design or research for directly inhibiting self-polymerization of the monomer applied to the equipment is required.

### [SUMMARY OF THE INVENTION]

An object of the present disclosure is to provide a lubricant composition for implementing improved polymerization efficiency and process stability.

Another object of the present disclosure is to provide a method of preparing an ethylene-based polymer using the above-described lubricant composition.

To achieve the above objects, according to an aspect of the present disclosure, there is provided a lubricant composition for preparing an ethylene-based polymer including: a base oil which comprises a white mineral oil; and an oxidation stabilizer represented by Formula 1. The oxidation stabilizer may have a solubility of 0.1 g/100 g or more in the white mineral oil at 25°C:

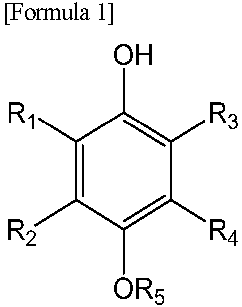

In Formula 1, R₁ to R₄ are each hydrogen or a C₁ to C₅ alkyl group, and at least one of R₁ to R₄ is a C₁ to C₅ alkyl group, R₅ is a C₁ to C₅ alkyl group, and a sum of total carbon atoms of R₁ to R₅ is 9 or less.

In some embodiments, at least one of R₁ to R₄ may be a tert-alkyl group.

In some embodiments, at least one of R₁ to R₄ may be a tert-butyl group.

In some embodiments, any one of R₁ and R₂ and any one of R₂ and R₄ may be a C₁ to C₅ alkyl group, respectively.

In some embodiments, R₅ may be a methyl group.

In some embodiments, a content of the oxidation stabilizer may be 0.1% by weight to 2.0% by weight based on a total weight of the base oil.

In some embodiments, the white mineral oil may have a viscosity of 20 mm²/s to 330 mm²/s at 40°C.

In some embodiments, the white mineral oil may have a flash point of 85°C or higher.

In some embodiments, the white mineral oil may have a density of 0.800 g/cm³ to 0.900 g/cm³ at 25°C.

In some embodiments, the lubricant includes no phenothiazine compound.

According to another aspect of the present disclosure, there is provided a method of preparing an ethylene-based polymer including: injecting the lubricant composition for preparing an ethylene-based polymer into a compression device; moving a monomer for preparing an ethylene-based polymer including an ethylene monomer through the compression device into a reactor; and reacting the monomer for preparing an ethylene-based polymer in the reactor.

In some embodiments, the monomer for preparing an ethylene-based polymer may further include a carboxylic acid monomer or an acrylate monomer.

In some embodiments, the ethylene-based polymer may include at least one of an ethylene-carboxylic acid copolymer, an ethylene-acrylate copolymer, and polyethylene.

According to exemplary embodiments, a lubricant including the white mineral oil and an oxidation stabilizer having a specific formula may be used in a compression device into which a monomer is injected. The oxidation stabilizer may have a solubility of 0.1 g/100 g or more in the white mineral oil.

The self-polymerization of the monomer may be inhibited for a long period of time by the oxidation stabilizer, and damage to the compression device due to contact with the monomer may be prevented. Accordingly, defects such as plugging of polymerization equipment may be prevented, and polymerization efficiency and yield of the ethylene-based polymer may be improved.

### [BRIEF DESCRIPTION OF THE DRAWINGS]

The above and other objects, features and other advantages of the present disclosure will be more clearly understood from the following detailed description taken in conjunction with the accompanying drawing, in which:

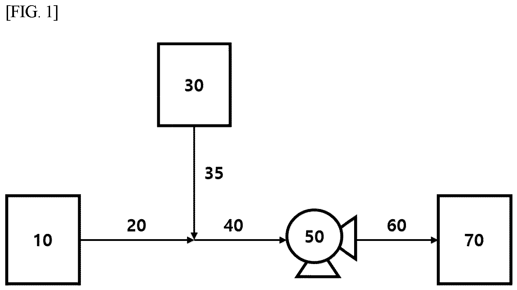

FIG. 1 is a schematic process flowchart for describing a polymer preparation method according to exemplary embodiments.

### [DETAILED DESCRIPTION OF THE INVENTION]

The embodiments of the present disclosure provide a lubricant composition for preparing an ethylene-based polymer (hereinafter, may be abbreviated as a lubricant composition) which includes a base oil and an oxidation stabilizer.

In addition, the embodiments of the present disclosure provide a method of preparing an ethylene-based polymer using the lubricant composition.

The term "(meth)acrylic acid" as used herein is used as a meaning of including both acrylic acid and methacrylic acid. The term "(meth)acrylate" as used herein is used as a meaning of including both acrylate and methacrylate.

Hereinafter, the present disclosure will be described in detail through embodiments with reference to the accompanying drawings.

The lubricant composition includes a base oil and an oxidation stabilizer.

The base oil may be included as a solvent of the lubricant composition. For example, the base oil may be included as a plasticizer, a diluent or media. Due to the base oil, an increase in friction inside polymerization equipment, a petrochemical facility, etc., and an increase in temperature and pressure inside the equipment caused by the increased friction may be prevented.

The base oil may include a white mineral oil. The white mineral oil may be nonpolar hydrocarbon with improved stability, and may not be harmful to the human body, such that it may be applied to various industries such as pharmaceuticals, cosmetics, agriculture, and food, etc. For example, the lubricant composition may include a white mineral oil as the base oil, such that it may be suitably used in the preparation of a copolymer which is used for food packaging purposes.

The base oil may be included as the balance of the lubricant composition except for the components to be described below. It should be understood that the "balance" may be a variable amount adjusted according to the components added to the composition.

The oxidation stabilizer may be included as a component for inhibiting polymerization between radical reactive monomers such as polar monomers. For example, self-polymerization of the polar monomer may be inhibited even under high temperature and high pressure conditions due to an interaction between the oxidation stabilizer and the polar monomer.

The oxidation stabilizer may include a compound represented by Formula 1.

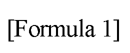

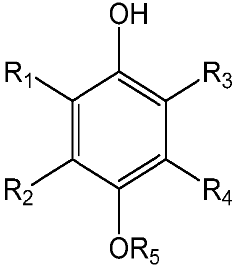

In Formula 1, R₁ to R₄ are each hydrogen or a C₁ to C₅ alkyl group, and at least one of R₁ to R₄ is a C₁ to C₅ alkyl group.

R₅ is a C₁ to C₅ alkyl group.

A sum of total carbon atoms of R₁ to R₅ is 9 or less.

Since the oxidation stabilizer has the above-described structure, it may be easily dissolved in the white mineral oil while effectively inhibiting the self-polymerization of the radical reactive monomers such as ethylene, polar monomers and the like.

An alkoxy group and a hydroxyl group are located at para positions of a benzene ring of the oxidation stabilizer, respectively, such that polymerization inhibition performance for the radical reactive monomer may be improved. For example, if any one of the alkoxy group or the hydroxyl group is missing or is located at meta or ortho position to each other, an electron density, electrostatic properties, etc. may be changed in the molecular structure, such that the reactivity for the radical active substance may be decreased.

The oxidation stabilizer has an alkyl group having 5 or less carbon atoms as other substituents (Ri to R₄) of the benzene ring, such that it may be effectively dissolved in the white mineral oil.

The sum of the total carbon atoms of the substituents (Ri to R₅) in the oxidation stabilizer is adjusted to 9 or less, such that the self-polymerization between the radical reactive monomers may be effectively inhibited while increasing the solubility in the white mineral oil. For example, if the sum of the carbon numbers of the substituents exceeds 9, the self-polymerization inhibition ability on the radical reactive monomer may be reduced due to the high content of carbon, and the solubility in the oil may be reduced due to steric hindrance.

When the solubility of the oxidation stabilizer in the white mineral oil is low, the oxidation stabilizer may be precipitated or precipitated from the lubricant composition. Accordingly, the lubricating performance by the lubricant composition and the polymerization stability by the oxidation stabilizer may not be substantially implemented.

In some embodiments, R₁ to R₄ may each independently be a normal alkyl group, a sec-alkyl group, an iso-alkyl group or a tert-alkyl group.

In some embodiments, at least one of R₁ to R₄ may be a tert-alkyl group. The solubility of the oxidation stabilizer in the white mineral oil may be further improved by the bulky alkyl group.

In one embodiment, at least one of R₁ to R₄ may be a tert-butyl group. Accordingly, reactivity between the hydroxyl group of the oxidation stabilizer and the radical of the polar monomer may be further increased. Accordingly, the self-polymerization between the polar monomers may be further inhibited.

In some embodiments, any one of R₁ and R₂ and any one of R₂ and R₄ may be a C₁ to C₅ alkyl group, respectively. For example, any one of R₁ and R₂ and any one of R₂ and R₄ may be a tert-butyl group, respectively.

Since the alkyl group is symmetrically located with the hydroxyl group and an alkoxy group (OR₅) interposed therebetween, hydrogen or electrons may be easily transferred from the oxidation stabilizer to active radicals. Accordingly, the radicals of the monomers may be consumed in a short period of time, such that the self-polymerization between the monomers may be effectively inhibited.

In one embodiment, R₂ and R₄ may be a C₁ to C₅ alkyl group, respectively.

For example, the oxidation stabilizer may include at least one of compounds represented by Formula 1-1 to Formula 1-5.

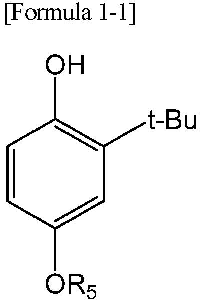

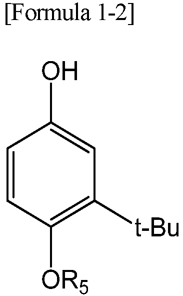

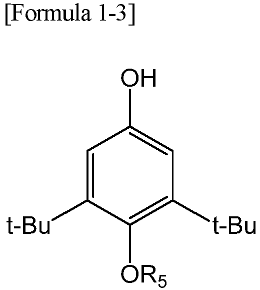

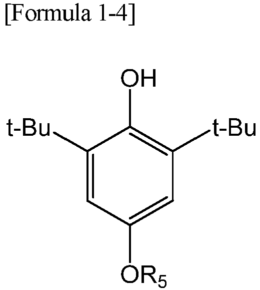

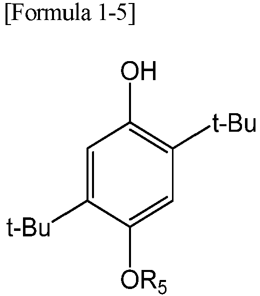

R₅ may be a normal alkyl (n-alkyl) group. In some embodiments, R₅ may be a methyl group. Accordingly, a self-polymerization inhibition mechanism of the radical reactive monomer by the oxidation stabilizer may be further effectively implemented.

For example, the oxidation stabilizer may include a compound represented by Formula 1-6.

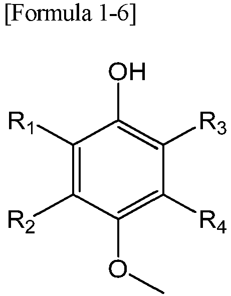

In Formula 1-1 to Formula 1-6, R₁ to R₄ and R₅ are each the same as those described in Formula 1.

In some embodiments, the oxidation stabilizer may include a mixture of the compounds of Formula 1-1 and Formula 1-2. The compound in which an alkyl group is substituted at the meta position and the compound in which an alkyl group is substituted at the ortho position may be used together to further improve the reactivity of the oxidation stabilizer to the radical active substance. Accordingly, the self-polymerization inhibition performance by the lubricant composition may be implemented for a longer period of time.

The oxidation stabilizer may have a solubility of 0.1 g/100 g or more in the white mineral oil at 25°C. For example, the respective substituents of Formula 1 may be selected so that the oxidation stabilizer has a solubility of 0.1 g/100 g or more in the white mineral oil.

For example, if the solubility of the oxidation stabilizer in the white mineral oil is less than 0.1 g/100 g, the precipitation of the oxidation stabilizer may be increased due to a high pressure environment during it is moved and discharged. When the oxidation stabilizer is separated or precipitated without being substantially dissolved in the base oil, a reaction between the hydroxyl group of the oxidation stabilizer and the active radical of the polar monomer may be inhibited. Accordingly, self-polymerization of the monomer may be initiated and propagated by the active radical.

In some embodiments, the solubility of the oxidation stabilizer in the white mineral oil may be 0.2 g/100 g or more, 0.4 g/100 g or more, or 0.5 g/100 g or more. Within the above range, a concentration of the oxidation stabilizer in the lubricant composition may be increased, and the self-polymerization may be effectively inhibited even if it comes into contact with a high concentration of radical reactive monomer solution.

In one embodiment, the solubility of the oxidation stabilizer in the white mineral oil may be 5.0 g/100 g or less, 3.0 g/100 g or less, or 1.5 g/100 g or less.

In some embodiments, a content of the oxidation stabilizer may be 0.1% by weight ("wt%") to 2.0 wt% based on a total weight of the base oil.

When the content of the oxidation stabilizer is 0.1 wt% or more, the self-polymerization of the radical reactive monomer may be further effectively inhibited. Accordingly, defects such as clogging in production facilities and process devices may be prevented, and the yield and process efficiency of the ethylene copolymer may be further improved.

When the content of the oxidation stabilizer is 2.0 wt% or less, it is possible to prevent an increase in human toxicity and environmental hazards due to the oxidation stabilizer. In addition, if the content of the oxidation stabilizer is excessively increased, the radical active substance may be reduced, thereby causing a decrease in the polymerization efficiency, and the lubricant composition may be oxidized, such that the oil may be discolored or deteriorated.

In one embodiment, the content of the oxidation stabilizer may be 0.1 wt% to 1.5 wt%, 0.1 wt% to 1.0 wt%, 0.1 wt% to 0.9 wt%, or 0.3 wt% to 0.8 wt% based on the total weight of the base oil.

In some embodiments, the white mineral oil may have a viscosity of 20 mm²/s to 330 mm²/s at 40°C. Within the above range, the oxidation stabilizer may be more easily dissolved in the white mineral oil, and the lubricant composition and the monomer may come into contact more uniformly. Therefore, the self-polymerization inhibition performance by the lubricant composition may be maintained for a long period of time.

In one embodiment, the white mineral oil may have a viscosity of 50 mm²/s to 310 mm²/s, 50 mm²/s to 250 mm²/s, 100 mm²/s to 250 mm²/s or 110 mm²/s to 220 mm²/s. Within the above range, friction reduction performance and polymerization inhibition performance may be further improved. The viscosity may be measured according to the ASTM D 445 standard.

In some embodiments, the white mineral oil may have a flash point of 85°C or higher. For example, the white mineral oil may have a flash point of 88°C or higher, 90°C or higher, or 92°C or higher. The flash point may be measured according to the ASTM D 92 standard. Within the above range, the stability of the lubricant composition may be further improved.

In some embodiments, the white mineral oil may have a boiling point of 200°C or higher. For example, the white mineral oil may have a boiling point of 210°C or higher, 220°C or higher, or 230°C or higher. For example, the white mineral oil may have a boiling point of 570°C or lower but is not limited thereto. The boiling point may be measured according to the ASTM D 86 standard.

In some embodiments, the white mineral oil may have a density of 0.800 g/cm³ to 0.900 g/cm³ at 25°C. Within the above range, the oxidation stabilizer may be more easily dissolved, and the oxidation stabilizer may more uniformly come into contact or be mixed with the radical reactive monomers. Accordingly, the self-polymerization between monomers by the radical active substance may be effectively inhibited.

In one embodiment, the white mineral oil may have a density of 0.820 g/cm³ to 0.900 g/cm³, 0.850 g/cm³ to 0.900 g/cm³, 0.850 g/cm³ to 0.890 g/cm³, or 0.860 g/cm³ to 0.890 g/cm³. The density may be measured according to the ASTM D 4052 standard.

In some embodiments, the lubricant composition may not include a phenothiazine compound, i.e., include no phenothiazine compound.

The phenothiazine compound is toxic and has a high risk to the human body by directly acting on the nervous system. Therefore, for example, the phenothiazine compound is not certified for food contact regulations, such that it is not suitable for the production of a polymer for the food packaging purpose. Therefore, since the lubricant composition does not include the phenothiazine compound, the ethylene-based polymer may be used for food packaging purpose, for example.

In addition, the phenothiazine compound has low solubility in the white mineral oil. Therefore, when the lubricant composition includes the phenothiazine compound, the stability of the lubricant composition may be decreased or the viscosity may be increased, such that a reaction between the oxidation stabilizer and the radical active substance may be inhibited.

In some embodiments, the lubricant composition may not include a hindered phenol compound except for the compound represented by Formula 1.

The hindered phenol compound has no reactivity to the radical active substance of the monomer, such that the polymerization inhibition effect in the polymerization system may be reduced. For example, the hindered phenol compound has high solubility in the base oil, such that the concentration of the oxidation stabilizer in the polymerization system may be relatively reduced. In this case, the contact and reaction between the oxidation stabilizer and the radical active substance may be reduced, and a self-polymerization may be initiated and transferred by the radical active substance that has not reacted with the oxidation stabilizer.

FIG. 1 is a schematic process flowchart for describing a method of preparing an ethylene-based polymer according to exemplary embodiments.

Referring to FIG. 1, a first monomer including an ethylene monomer may be supplied from a first monomer supply unit 10. For example, the first monomer may be moved from the first monomer supply unit 10 to a compression device 50 through a first flow path 20.

In one embodiment, additives such as a stabilizer, a reaction inhibitor, and an antioxidant, etc. may be supplied together with the first monomer.

In some embodiments, a second monomer including a comonomer may be supplied from a second monomer supply unit 30. For example, the second monomer is moved through the second flow path 35 and may come into contact with the first monomer supplied through the first flow path 20.

The comonomer may include a carboxylic acid monomer or an acrylate monomer of which a chain polymerization reaction is possible.

In some embodiments, (meth)acrylic acid may be used as the carboxylic acid monomer. In some embodiments, (meth)acrylate or alkyl(meth)acrylate may be used as the acrylate monomer.

A mixture of the first monomer and the second monomer may be moved to the compression device 50 through an injection flow path 40 and discharged through a discharge flow path 60 to be injected into a reactor 70 for polymerization/copolymerization.

For example, when only ethylene is used as the monomer, polyethylene may be prepared in the reactor 70. For example, when a carboxylic acid monomer or an (alkyl) acrylate monomer is used as the comonomer, copolymerization of the comonomer and ethylene may be performed in the reactor 70 to prepare an ethylene-carboxylic acid copolymer (e.g., an EAA copolymer) or an ethylene-(alkyl) acrylate copolymer.

The compression device 50 may include discharge equipment, such as a pump, a compressor, etc. The above-described lubricant composition may be injected into the compression device 50.

For example, the compression device 50 may include a cylinder structure such as a piston and a bushing which surrounds the piston, and the above-described lubricant composition may be injected into a gap between the piston and the cylinder structure.

Since friction may occur repeatedly in the gap between the piston and the cylinder structure, a local temperature increase may occur due to frictional heat. If an internal temperature of the compression device 50 exceeds a polymerization temperature of the monomer, for example, a self-polymer such as polyacrylic acid (PAA) may be generated. In this case, clogging of the gap may be caused, such that an exchange cycle or cleaning cycle of the compression device 50 may be shortened, thereby reducing process efficiency, and the yield of the copolymer may be deteriorated.

According to exemplary embodiments, the above-described lubricant composition may be used to inhibit self-polymerization of the monomer even under high temperature and high pressure conditions. Therefore, a use period of the compression device 50 may be increased, and the process reliability may be improved by inhibiting the formation of the self-polymer such as the PAA.

In some embodiments, a discharge pressure of the compression device 50 may be 1,000 bar to 4,000 bar, and for example, 1,500 bar to 3,000 bar. Within the above range, accumulation of the monomers inside the compression device 50 and the discharge flow path 60 may be prevented.

The process conditions in the compression device 50 and the reactor 70 may be adjusted in consideration of self-polymerization prevention of the carboxylic acid-based monomer and copolymer production efficiency.

In some embodiments, the temperature in the compression device 50 may be lower than the temperature in the reactor 70. For example, the temperature in the compression device 50 may be about 20°C to 120°C, and the temperature in the reactor 70 may be about 150°C to 270°C.

In some embodiments, the pressure in the reactor 70 may be 1,100 bar to 2,500 bar, and for example 1,300 bar to 2,300 bar. In one embodiment, the discharge pressure in the compression device 50 may be greater than the copolymerization pressure in the reactor 70.

The ethylene-based polymer prepared by the above-described method according to the embodiments may be applied to various fields such as a sealing material, an adhesive, a packing material, an optical film and the like. For example, the ethylene-based polymer may be applied to a surface of a polymer film, a paper sheet, a metal foil, fabrics, etc., and provided as a food packaging material or a food coating material.

The embodiments of the present disclosure described above include the following aspects, and can be implemented through at least one of the following aspects.

According to a first aspect of the present disclosure, a lubricant composition for preparing an ethylene-based polymer includes a base oil which comprises a white mineral oil; and an oxidation stabilizer represented by Formula 1. The oxidation stabilizer may have a solubility of 0.1 g/100 g or more in the white mineral oil at 25°C:

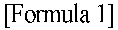

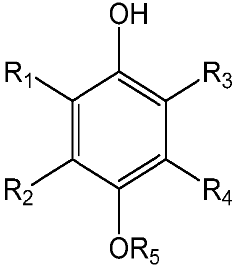

In Formula 1, R₁ to R₄ are be each hydrogen or a C₁ to C₅ alkyl group, and at least one of R₁ to R₄ is a C₁ to C₅ alkyl group, R₅ is a C₁ to C₅ alkyl group, and a sum of total carbon atoms of R₁ to R₅ is 9 or less.

In the first aspect, according to a second aspect of the lubricant composition for preparing an ethylene-based polymer, at least one of R₁ to R₄ may be a tert-alkyl group

In the first or the second aspect, according to a third aspect of the lubricant composition for preparing an ethylene-based polymer, at least one of R₁ to R₄ may be a tert-butyl group.

In the first aspect to the third aspect, according to a fourth aspect of the lubricant composition for preparing an ethylene-based polymer, any one of R₁ and R₂ and any one of R₂ and R₄ may be a C₁ to C₅ alkyl group, respectively.

In the first aspect to the fourth aspect, according to a fifth aspect of the lubricant composition for preparing an ethylene-based polymer, R₅ may be a methyl group

In the first aspect to the fifth aspect, according to a sixth aspect of the lubricant composition for preparing an ethylene-based polymer, a content of the oxidation stabilizer may be 0.1% by weight to 2.0% by weight based on a total weight of the base oil.

In the first aspect to the sixth aspect, according to a seventh aspect of the lubricant composition for preparing an ethylene-based polymer, the white mineral oil may have a viscosity of 20 mm²/s to 330 mm²/s at 40°C.

In the first aspect to the seventh aspect, according to an eighth aspect of the lubricant composition for preparing an ethylene-based polymer, the white mineral oil may have a flash point of 85°C or higher.

In the first aspect to the eighth aspect, according to a ninth aspect of the lubricant composition for preparing an ethylene-based polymer, the white mineral oil may have a density of 0.800 g/cm³ to 0.900 g/cm³ at 25°C.

In the first aspect to the ninth aspect, according to a tenth aspect of the lubricant composition for preparing an ethylene-based polymer, the lubricant includes no phenothiazine compound.

According to an eleventh aspect relative to an aspect of a method of preparing an ethylene-based polymer may include: injecting the lubricant composition for preparing an ethylene-based polymer into a compression device; moving a monomer for preparing an ethylene-based polymer including an ethylene monomer through the compression device into a reactor; and reacting the monomer for preparing an ethylene-based polymer in the reactor.

In the eleventh aspect, according to a twelfth aspect of the method of preparing an ethylene-based polymer, the monomer for preparing an ethylene-based polymer may further include a carboxylic acid monomer or an acrylate monomer.

In the eleventh or twelfth aspect, according to a thirteenth aspect of the method of preparing an ethylene-based polymer, the ethylene-based polymer may include at least one of an ethylene-carboxylic acid copolymer, an ethylene-acrylate copolymer, and polyethylene.

Hereinafter, experimental examples including specific examples and comparative examples are proposed to facilitate understanding of the present disclosure.

### Experimental Example 1: Measurement of solubility

A lubricant composition was prepared by mixing a white mineral oil and the oxidation stabilizer of Table 1 below in a weight ratio of 100:0.1. As the white mineral oil, Hydrobrite White mineral oil was used, which had a density of about 0.860 to 890 g/cm³ (at 25°C), a viscosity of about 230 to 310 mm²/s (at 40°C), and a flash point of about 93.4°C.

The lubricant composition was left for 1 hour and observed visually. If precipitation occurred or the lubricant composition discolored or became opaque, it was evaluated as "X." When no precipitation occurred and the lubricant composition was colorless and transparent, it was evaluated as "O."

### Experimental Example 2: Acrylic acid self-polymerization

A lubricant composition was prepared by mixing the white mineral oil and the oxidation stabilizer of Table 1 below in a weight ratio of 100:0.5.

Acrylic acid (AA) (99% purity, manufactured by Sigma-Aldrich) and the lubricant composition were mixed in a weight ratio of 1:1 in a 1 L reactor subjected to treatment in a nitrogen atmosphere, followed by sealing the reactor.

The reactor was heated to 100°C, followed by observing whether a self-polymer (PAA) was formed in the reactor every 10 minutes. As soon as the PAA was observed visually, the experiment was stopped and a polymerization time was recorded. When the PAA was formed within 10 minutes, it was evaluated as "-." When the PAA was not observed for 150 hours or more after the start of the reaction, it was evaluated as ">150 hr."

Evaluation results are shown together in Table 1 below.

**[TABLE 1]**

| Division | Oxidation stabilizer | Evaluation of solubility | Polymerization time |
|---|---|---|---|
| Example 1 | A-1 | O | >150 hr |
| Example 2 | A-2 | O | 23 hr |
| Example 3 | A-3 | O | 72 hr |

| Example 4 | A-4 | O | 10 hr |
|---|---|---|---|
| Comparative Example 1 | B-1 | O | 2 hr |
| Comparative Example 2 | B-2 | X | >150 hr |
| Comparative Example 3 | B-3 | X | >150 hr |
| Comparative Example 4 | B-4 | O | 30 min |
| Comparative Example 5 | B-5 | O | - |
| Comparative Example 6 | B-6 | X | 2 hr |
| Comparative Example 7 | B-7 | X | 20 min |
| Comparative Example 8 | B-8 | X | 20 min |
| Comparative Example 9 | B-9 | O | 2 hr |
| Comparative Example 10 | B-10 | O | 20 min |
| Comparative Example 11 | B-11 | O | 2 hr |
| Comparative Example 12 | B-12 | O | - |
| Comparative Example 13 | B-13 | O | - |
| Comparative Example 14 | B-14 | O | - |
| Comparative Example 15 | B-15 | O | 40 min |
| Comparative Example 16 | B-16 | O | 40 min |
| Comparative Example 17 | B-17 | O | 5 hr |
| Comparative Example 18 | B-18 | O | 20 min |
| Comparative Example 19 | B-19 | O | 20 min |

Specific compound names and formulas listed in Table 1 above are as follows.

### A-1: Butylated hydroxyanisole (mixture of 3-tert-butyl-4-hydroxyanisole and 2-tert-butyl-4-hydroxyani sole)

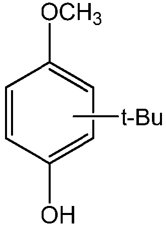

### A-2: 2,6-Di-tert-butyl-4-methoxyphenol

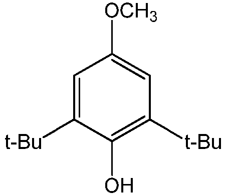

### A-3: 3-tert-butyl-4-hydroxyanisole

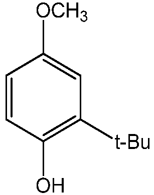

### A-4: 2,5-Di-tert-butyl-4-methoxyphenol

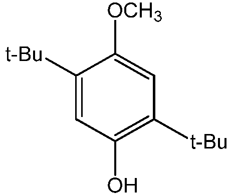

### B-1: Butylated hydroxytoluene

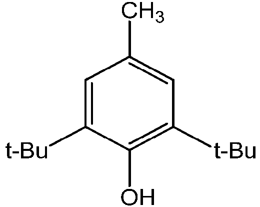

### B-2: 4-Methoxyphenol

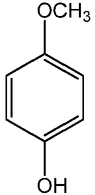

### B-3: Phenothiazine

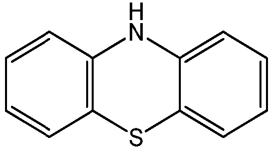

### B-4: Vitamin E

### B-5: 2,6-Di-tert-butylphenol

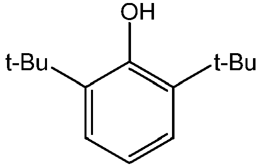

### B-6: 2,6-Di-tert-butyl-4-hydroxymethylphenol

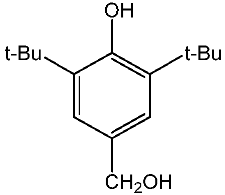

### B-7: 3,5-Di-tert-butyl-4-hydroxybenzoic acid

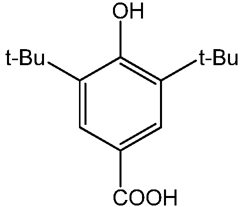

### B-8: Diethyl 3,5-Di-tert-butyl-4-hydroxybenzylphosphonate

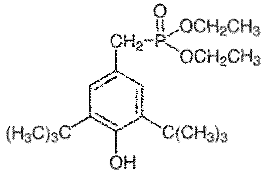

### B-9: 2,4-Di-tert-amylphenol

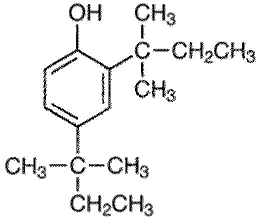

### B-10: 2,2'-Methylenebis(6-tert-butyl-4-ethylphenol)

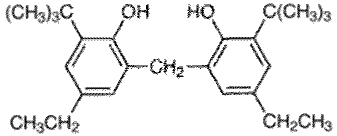

### B-11: 2,5-Bis(1,1,3,3-tetramethylbutyl)hydroquinone

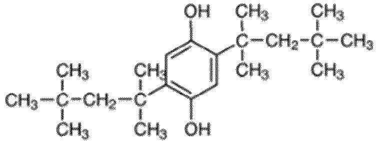

### B-12: 4-[[4,6-Bis(n-octylthio)-1,3,5-triazin-2-yl]amino]-2,6-di-tert-butylphenol

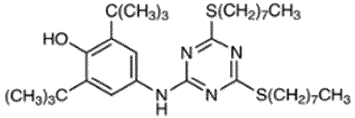

### B-13: 2,2'-ThiodiethyleneBis[3-(3,5-di-tert-butyl-4-hydroxyphenyl)propionate]

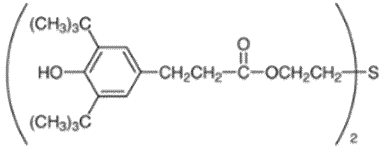

### B-14: 2,6-Di-tert-butyl-4-ethylphenol

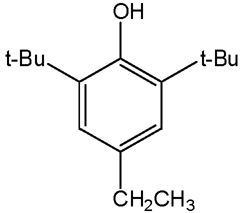

### B-15: SONGNOXL570 (mixture of t-octylated & t-butylated diphenylamine)

### B-16: SONGNOX L670 (bis(nonylphenyl)amine)

### B-17: 3,5-Di-tert-butylcatechol

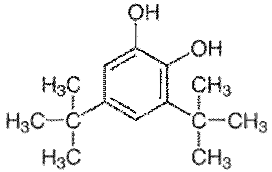

### B-18: 2-hydroxy-4-n-octyloxybenzophenone

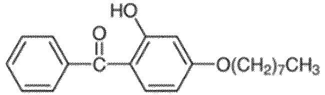

### B-19: 4-[[4,6-Bis(n-octylthio)-1,3,5-triazin-2-yl]amino]-2,6-di-tert-butylphenol

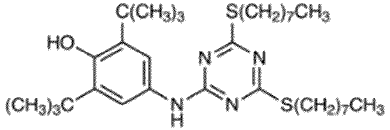

Referring to Table 1, when the compound of Formula 1 was used alone as the oxidation stabilizer in the lubricant composition, the solubility in the white mineral oil was high, and the PAA formation inhibition effect was maintained for a long period of time.

In Example 1, the oxidation stabilizer included a mixture of a compound in which the tert-butyl group was located at the meta position and a compound in which the tert-butyl group was located at the ortho position, and it had greatly increased polymerization stability time while having high solubility characteristics in the white mineral oil.

In the case of Comparative Example 1, a hydroquinone compound was used as the oxidation stabilizer, and the polymerization stability time was greatly reduced. In Comparative Example 3, a phenothiazine compound was used as the oxidation stabilizer, and the oxidation stabilizer was not substantially dissolved in the white mineral oil.

In the case of Comparative Example 2, because the alkyl group was not substituted with a benzene ring of the oxidation stabilizer, the solubility in the white mineral oil was greatly decreased.

## Claims

1. A lubricant composition for preparing an ethylene-based polymer comprising:
a base oil which comprises a white mineral oil; and
an oxidation stabilizer represented by Formula 1,
wherein the oxidation stabilizer has a solubility of 0.1 g/100 g or more in the white mineral oil at 25°C: 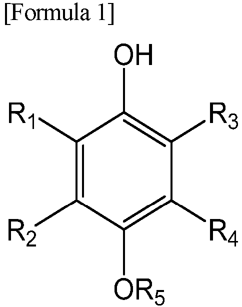
wherein R₁ to R₄ are each hydrogen or a C₁ to C₅ alkyl group, and at least one of R₁ to R₄ is a C₁ to C₅ alkyl group,
R₅ is a C₁ to C₅ alkyl group, and
a sum of total carbon atoms of R₁ to R₅ is 9 or less.

2. The lubricant composition for preparing an ethylene-based polymer according to claim 1, wherein at least one of R₁ to R₄ is a tert-alkyl group.

3. The lubricant composition for preparing an ethylene-based polymer according to claims 1 or 2, wherein at least one of R₁ to R₄ is a tert-butyl group.

4. The lubricant composition for preparing an ethylene-based polymer according to anyone of claims 1 to 3, wherein any one of R₁ and R₂ and any one of R₂ and R₄ are a C₁ to C₅ alkyl group, respectively.

5. The lubricant composition for preparing an ethylene-based polymer according to anyone of claims 1 to 4, wherein R₅ is a methyl group.

6. The lubricant composition for preparing an ethylene-based polymer according to anyone of claims 1 to 5, wherein a content of the oxidation stabilizer is 0.1% by weight to 2.0% by weight based on a total weight of the base oil.

7. The lubricant composition for preparing an ethylene-based polymer according to anyone of claims 1 to 6, wherein the white mineral oil has a viscosity of 20 mm²/s to 330 mm²/s at 40°C.

8. The lubricant composition for preparing an ethylene-based polymer according to anyone of claims 1 to 7, wherein the white mineral oil has a flash point of 85°C or higher.

9. The lubricant composition for preparing an ethylene-based polymer according to anyone of claims 1 to 8, wherein the white mineral oil has a density of 0.800 g/cm³ to 0.900 g/cm³ at 25°C.

10. The lubricant composition for preparing an ethylene-based polymer according to anyone of claims 1 to 9, wherein the lubricant composition is free from phenothiazine compound.

11. A method of preparing an ethylene-based polymer comprising:
injecting the lubricant composition for preparing an ethylene-based polymer according to anyone of claims 1 to 10 into a compression device (50);
moving a monomer for preparing an ethylene-based polymer including an ethylene monomer through the compression device (50) into a reactor (70); and
reacting the monomer for preparing an ethylene-based polymer in the reactor (70).

12. The method of preparing an ethylene-based polymer according to claim 11, wherein the monomer for preparing an ethylene-based polymer further comprises a carboxylic acid monomer or an acrylate monomer.

13. The method of preparing an ethylene-based polymer according to claims 11 or 12, wherein the ethylene-based polymer comprises at least one of an ethylene-carboxylic acid copolymer, an ethylene-acrylate copolymer, and polyethylene.

14. The method of preparing an ethylene-based polymer according to anyone of claims 11 to 13, wherein (a) a discharge pressure of the compression device (50) is adjusted to be 100 MPa to 400 MPa or 150 MPa to 300 MPa, and/or (b) a temperature in the compression device (50) is adjusted to be lower than a temperature in the reactor (70), and/or (c) the temperature in the compression device (50) is adjusted to be 20°C to 120°C and the temperature in the reactor (70) is adjusted to be 150°C to 270°C, and/or (d) pressure in the reactor (70) is adjusted to be 110 MPa to 250 MPa or 130 MPa to 230 MPa, and/or (e) the discharge pressure in the compression device (50) is adjusted to be greater than the copolymerization pressure in the reactor (70).

15. Use of an ethylene-based polymer prepared by the method according to anyone of claims 11-14, for forming a layer or surface layer of a sheet-like material such as a polymer film, a paper sheet, a metal foil or a fabric, said sheet-like material forming a food packaging material or a food coating material.
